# DEMANDE DE BREVET EUROPEEN

(11) **EP 1 041 213 A1**
(43) Date de publication de la demande: **04.10.2000**
(21) Numéro de dépôt: 00400498.2
(22) Date de dépôt: 24.02.2000
(51) Int. Cl.: E04C 2/54

(54) **Plaques antifragmentation en polymère thermoplatique et leur utilisation comme murs antibruit**

(30) Priorité: 30.03.1999 FR 9903939
(71) Demandeur: Atofina, 92800 Puteaux (FR)
(72) Inventeur: Marcarian, Xavier, 64140 Billere (FR); Omerin, Pierre, 63600 Ambert (FR)
(74) Mandataire: Luziau, Nelly

(57) **Abrégé**

Les plaques antifragmentation en matière polymère thermoplastique comprennent au moins un réseau de brins noyés dans celle-ci et formés, chacun, d'une âme recouverte d'un guipage.

Application aux murs antibruit.

## Description

L'invention est relative à des plaques anti-fragmentation en matière polymère thermoplastique, particulièrement en polymère (méth)acrylique.

Des plaques en matière polymère, sous l'impact d'un matériau contondant, peuvent se casser et former des morceaux ou fragments. La casse de telles plaques, lorsqu'elles sont utilisées sur des voies publiques, crée donc un danger pour le milieu environnant. Ceci est particulièrement le cas lorsque ces plaques sont utilisées comme murs antibruit et installées le long des autoroutes, des ponts, etc....

Il a donc été recherché des moyens pour éviter que les fragments de ces plaques en matière polymère ne tombent sur les voies publiques.

Un tel moyen a été décrit dans le brevet européen EP-B-407 852. Selon ce brevet, des plaques en verre acrylique (ou (co)polymère méthacrylique) utilisées comme murs ou écrans antibruit contiennent, enrobés à peu près au milieu de la section des plaques, des monofilaments en matière plastique. Ces monofilaments retiennent les morceaux cassés et évitent ainsi leur chute. Conviennent particulièrement bien des monofilaments en polyamide par suite de l'adhérence relativement faible entre ces filaments et le verre acrylique constituant les plaques. Lors de l'impact d'un objet contondant sur la plaque, celle-ci se casse, mais les monofilaments se tendent et ne sont pas rompus, tout au moins une grande partie d'entre eux.

On a remarqué que, sous l'effet du choc, par suite de la résistance à la traction des monofilaments et de leur faible adhérence au verre acrylique, les monofilaments glissent dans la plaque sans s'en extraire totalement. L'effet obtenu est la rétention des morceaux par les monofilaments. Il est donc essentiel de bien contrôler l'adhérence des monofilaments au verre acrylique car une adhérence trop élevée entraînerait la rupture des monofilaments au moment du choc. Une adhérence trop faible provoquerait l'extraction complète des monofilaments et, par suite, la non- rétention des fragments de la plaque.

La présente invention a donc pour objet un nouveau moyen, utilisable dans des plaques en matière polymère thermoplastique, leur conférant une propriété que nous appelons antifragmentation, c'est-à-dire évitant la chute des morceaux ou fragments résultant de l'impact d'un objet contondant sur ces plaques.

Les plaques antifragmentation en matière polymère thermoplastique, selon l'invention, contiennent au moins un réseau de brins noyés dans celle-ci et formés chacun d'une âme recouverte d'un guipage.

Dans ces plaques, les brins sont disposés, de préférence, dans un plan parallèle à une des faces des plaques et à une distance de cette face telle que l'on est :
2 r ≤ e/2 et
0,1e ≤ d - r ≤ 0,5e avec e= épaisseur des plaques, d=distance entre l'axe du brin et ladite face des plaques et r= rayon des brins.

Le diamètre des brins peut varier. Il est généralement de 0,2 à 3 mm et, de préférence, de 1,5 à 2,5 mm.

Les plaques peuvent avoir une épaisseur de 3 mm à 30 mm, suivant l'utilisation envisagée.

Le réseau utilisé dans les plaques selon l'invention consiste en un ensemble de brins de préférence parallèles dans une même direction ou dans plusieurs directions constituant alors un maillage. Les brins parallèles sont espacés généralement de 10 mm à 300 mm, de préférence de 30 mm à 150 mm. Lorsque les brins constituent un maillage suivant deux directions formant, par exemple, un angle de 90°, la distance entre les brins parallèles suivant ces deux directions peut être identique ou différente.

Comme indiqué précédemment, les brins utilisés dans les plaques selon l'invention sont formés, chacun, d'une âme recouverte d'un guipage.

L'âme se présente sous la forme d'un monofilament ou d'un multifilament. Le multifilament est un enchevêtrement de filaments, qui peuvent être eux-mêmes des multifilaments ; le multifilament peut se présenter sous la forme d'une corde, d'une tresse ou toute autre forme du moment qu'il est constitué par une association de plusieurs filaments.

L'âme peut être en matière polymère comme du polyamide, polyéthylène, polypropylène, polyester tel que polytéréphtalate d'éthylène, en matière métallique par exemple des fils en cuivre, en fibres textiles naturelles comme le coton.

L'âme est recouverte d'un guipage, c'est-à-dire d'un revêtement obtenu par un enroulement hélicoïdal avec chevauchement d'un film de quelques millimètres de largeur (par exemple 5 mm à 20 mm) et de quelques micronmètres d'épaisseur (par exemple 5 µm à 30 µm).

L'âme peut être recouverte d'un guipage unique ou double (le guipage double résultant de deux enroulements dans le même sens ou de deux enroulements croisés).

Le guipage permet d'isoler l'âme du brin de la matière polymère thermoplastique formant les plaques et, ainsi, éviter tout contact entre l'âme et cette matière polymère thermoplastique, contact qui pourrait entraîner unr rigidification de l'âme, sa fragilisation et la diminution de sa résistance à la rupture. Le film formant le guipage peut être formé d'une matière polymère comme du polyéthylène, du polypropylène, du polytétrafluoroéthylène, un polyester tel que du polytéréphtalate d'éthylène, etc.

Le guipage adhère de préférence à la matière polymère thermoplastique constituant les plaques. Cette adhérence peut résulter de la nature du matériau formant le guipage, mais aussi du fait que le guipage, étant un enroulement hélicoïdal avec chevauchement, a une surface qui n'est pas parfaitement lisse.

Lors de l'impact d'un objet contondant sur une plaque, celle-ci se casse. L'âme des brins, monofilament ou multifilament, coulisse dans le guipage qui, lui, reste solidaire de la matière polymère thermoplastique. L'âme glisse dans le guipage, mais ne s'extrait pas totalement de la plaque, retenant ainsi les fragments cassés.

La matière polymère constituant les plaques antifragmentation, selon l'invention, peut être notamment du polycarbonate, des polymères du méthacrylate de méthyle comprenant de 80 % à 100 % en poids de méthacrylate de méthyle (MAM) et de 0 à 20 % en poids d'au moins un monomère ayant au moins une insaturation éthylénique copolymérisable avec le méthacrylate de méthyle. Ces monomères sont bien connus et on peut citer, en particulier, les acides acrylique et méthacrylique, les acrylates d'alkyle dans lesquels le groupement alkyle a de 2 à 4 atomes de carbone.

En particulier, les plaques en polymère de méthacrylate de méthyle ou en copolymère comportant majoritairement des motifs issus du monomère méthacrylate de méthyle (MAM) peuvent être préparées par différents procédés et notamment, par extrusion (et dans ce cas, les brins sont introduits dans la plaque selon l'invention par pultrusion), par procédé coulé ou coulé continu bien connu.

Pour la mise en oeuvre du procédé coulé, on utilise un moule formé de deux plaques planes, par exemple en verre inorganique, séparées par un joint périphérique (appelé jonc), généralement en polychlorure de vinyle, assurant l'étanchéité entre les deux plaques. La fermeture du moule est assurée par des pinces placées sur les côtés.

Comme il est bien connu, on verse dans le moule la composition à polymériser, c'est-à-dire du monomère MAM ou bien du sirop formé de prépolymère de méthacrylate de méthyle (taux de conversion de 5-20 %) à laquelle on a ajouté un initiateur de polymérisation en quantité suffisante pour polymériser le MAM ou compléter la polymérisation du sirop suivant le cas et, éventuellement, d'autres additifs usuels comme un agent de réticulation, un agent de démoulage, un agent de transfert de chaîne pour contrôler la masse moléculaire du polymère final, un agent antioxydant, etc. La polymérisation est réalisée ou achevée suivant le cas en plaçant le moule dans l'eau (procédé dit « en piscine ») ou en étuve à la température nécessaire (40-80°C), puis en étuve (à 100-130°C environ) pour la postpolymérisation.

L'épaisseur du jonc détermine l'épaisseur de la plaque de polymère obtenue.

Pour obtenir une plaque antifragmentation selon l'invention, on place au moins un réseau de brins dans le moule, puis on introduit la composition à polymériser et on réalise la polymérisation de la manière habituelle. Tout moyen approprié peut être utilisé pour insérer le réseau de brins dans le moule. Ce peut être, par exemple, un cadre, placé au contact d'une face interne du moule, d'une épaisseur correspondant à la distance à laquelle doit se trouver le réseau par rapport aux faces des plaques en polymère thermoplastique ; sur ce cadre, sont fixés les brins. Après la polymérisation, les bords des plaques sont éventuellement coupés pour éliminer le cadre.

Les plaques antifragmentation selon l'invention sont particulièrement utilisables comme murs anti-bruit. Dans ce cas, l'épaisseur des plaques est avantageusement comprise entre 10 mm et 25 mm de manière à obtenir l'effet d'insonorisation suffisant.

Les exemples suivants concernent des plaques antifragmentation servant de murs anti-bruit.

### Exemple 1 :

On utilise un moule formé de deux plaques en verre inorganique de dimension 2 m x 3 m et d'un jonc permettant d'obtenir une plaque d'une épaisseur de 15 mm.

On place un réseau de brins parallèles suivant une seule direction, distants de 3 cm, montés sur un cadre en polyméthacrylate de méthyle (PMMA) transparent d'une épaisseur appropriée pour que ce réseau se situe à peu près au milieu du moule en verre. Ces brins, de 2 mm de diamètre, sont constitués par une âme formée d'une tresse de filaments en polyamide, recouverte d'un guipage unique formé d'un film en polytéréphtalate d'éthylène de 10 mm de largeur et de 19 µm d' épaisseur pour obtenir une étanchéité vis-à-vis de la composition à polymériser. On introduit dans le moule la composition à polymériser (sirop de prépolymère de méthacrylate de méthyle et initiateur de polymérisation). Le moule est placé dans l'eau à une température de 70°C environ, puis en étuve à 120°C environ pour achever la polymérisation.

Après démoulage, on obtient une plaque de polyméthacrylate de méthyle d'une épaisseur de 15 mm. Le cadre, supportant les brins parallèles étant en PMMA transparent, il n'est pas nécessaire de couper les bords de la plaque pour le supprimer.

Le test utilisé pour vérifier l'antifragmentation de la plaque est un test d'impact de la plaque par une masse pendulaire de 542 Kg suspendue à l'extrémité d'un câble d'une grue. On ajuste l'énergie de l'impact en réglant la différence de hauteur de la masse entre son point de départ et le point d'impact. Dans l'exemple, l'énergie est de 6 900 joules. Dans ce test, la plaque est maintenue verticalement.

Aucun fragment n'est éjecté. Comme indiqué précédemment, dans la zone d'impact, le multifilament (dans cet exemple, une tresse) glisse dans le guipage sans s'extraire totalement et retient les fragments. Ceci montre que le guipage a assuré une étanchéité, empêchant la composition polymérisable de pénétrer jusqu'à l'âme du brin.

### Exemple 2 :

On opère comme à l'exemple 1, mais le réseau de brins est constitué par un maillage, les brins parallèles selon une première direction étant espacés de 3 cm et les brins parallèles selon une deuxième direction perpendiculaire à la première étant aussi espacés de 3 cm.

Avec le test indiqué à l'exemple 1, aucun fragment n'est éjecté.

## Revendications

1. Plaques antifragmentation en matière polymère thermoplastique comprenant au moins un réseau de brins noyés dans celle-ci et formés, chacun, d'une âme recouverte d'un guipage.

2. Plaques selon la revendication 1, dans lesquelles les brins sont disposés dans un plan parallèle à une des faces des plaques et à une distance de cette face telle que l'on est:
2r ≤ e/2 et
0,1e ≤ d - r ≤ 0,5e avec e= épaisseur des plaques, d=distance entre l'axe de l'âme et ladite face des plaques et r= rayon des brins.

3. Plaques selon l'une des revendications 1 et 2, dans lesquelles l'âme des brins est constituée par un monofilament ou un multifilament.

4. Plaques selon la revendication 3, dans lesquelles l'âme est en matière polymère ou métallique ou en matière textile naturelle.

5. Plaques selon la revendication 4, dans lesquelles l'âme est en polyamide, polyéthylène, polypropylène, en polyester, plus particulièrement en polytéréphtalate d'éthylène.

6. Plaques selon l'une des revendications 1 à 5, dans lesquelles le guipage est constitué par un film en matière polymère, de préférence, polyéthylène, polypropylène, polytétrafluoroéthylène, polyester, plus particulièrement en polytéréphtalate d'éthylène.

7. Plaques selon l'une des revendications 1 à 6, dans lesquelles le réseau est constitué de brins parallèles dans une seule direction.

8. Plaques selon la revendication 7, dans lesquelles les brins sont espacés d'une distance de 10 mm à 300 mm.

9. Plaques selon l'une des revendications 1 à 6, dans lesquelles le réseau est constitué de brins parallèles dans deux directions, formant un maillage.

10. Plaques selon la revendication 9, dans lesquelles la distance entre les brins parallèles selon les deux directions, identique ou différente, est de 10 mm à 300 mm.

11. Plaques selon l'une des revendications 1 à 10 dans lesquelles les brins ont un diamètre de 0,2 à 3 mm, de préférence de 1,5 à 2,5 mm.

12. Plaques selon l'une des revendications 1 à 11 dans lesquelles la matière polymère thermoplastique les constituant est choisie parmi le polycarbonate, les polymères du méthacrylate de méthyle comportant de 80 à 100 % en poids de méthacrylate de méthyle et de 0 à 20 % en poids d'au moins un monomère ayant au moins une insaturation éthylénique copolymérisable avec le méthacrylate de méthyle.

13. Mur anti-bruit comprenant une plaque antifragmentation conforme à l'une des revendications 1 à 12.

14. Mur anti-bruit selon la revendication 13, dans lequel la plaque a une épaisseur de 10 mm à 25 mm.
